# EUROPEAN PATENT SPECIFICATION

(11) **EP 4 032 678 B1**
(45) Date of publication and mention of the grant of the patent: **10.07.2024**
(21) Application number: 22151809.5
(22) Date of filing: 17.01.2022
(51) Int. Cl.: B29C 45/27, B29K 71/00

(54) **THERMAL INSULATION WASHER AND USE THEREOF IN EXTRUSION OF ULTRA-HIGH TEMPERATURE ENGINEERING PLASTICS**
THERMISCHE ISOLIERSCHEIBE UND IHRE VERWENDUNG BEI DER EXTRUSION VON TECHNISCHEN KUNSTSTOFFEN MIT ULTRAHOHER TEMPERATUR
RONDELLE D'ISOLATION THERMIQUE ET SON UTILISATION DANS L'EXTRUSION DE PLASTIQUES TECHNIQUES À ULTRA-HAUTE TEMPÉRATURE

(30) Priority: 20.01.2021 CN 202110078108
(43) Date of publication of application: 27.07.2022
(73) Proprietor: Ningbo Zero Engineering Plastics Co., Ltd., 315000 Ningbo Zhejiang (CN)
(72) Inventor: DING, Jiping, Ningbo, Zhejiang, 315000 (CN)
(74) Representative: Dr. Gassner & Partner mbB

(56) References cited:
- DE-A1- 10 013 920
- FR-A- 1 524 962
- ANONYMOUS: "Hot Runner System Installation Guide", 4 October 2019 (2019-10-04), pages 1 - 555, XP055924598, Retrieved from the Internet <URL:https://www.synventive.com/uploadedFiles/Private_Content/Current_Hot_Runner_Instruction_Manual/SYN_Install_Guide_Current_Products_EN_Rev11(1).pdf> [retrieved on 20220524]

## Description

### TECHNICAL FIELD

The present application relates to the field of extrusion molding of plastic products, and, more specifically, to a thermal insulation washer and the use thereof in the extrusion of ultra-high temperature engineering plastics.

### BACKGROUND

Based on the field of application, plastics can be divided general plastics and engineering plastics, in which the engineering plastics can be divided into general engineering plastics and special engineering plastics. Special engineering plastics refer to engineering plastics which can withstand a temperature of 150 °C or above and can be used as structural materials. The main varieties include polyphenylene sulfide (PPS), polyetherimide (PEI), polyether ether ketone (PEEK), etc.

In particular, PEEK is a special engineering plastic with excellent comprehensive performance and high heat resistance. It has high temperature resistance, and the products prepared therefrom can work at high temperature of 260 °C for a long time, while having excellent hot water resistance, solvent resistance, electrical insulation and fatigue resistance. Therefore, it is widely used in the fields such as precision electronics, petrochemical industry, rail transit, precision machinery and nuclear industry.

In conventional extrusion process of a plastic bar, polytetrafluoroethylene (PTFE) is usually used as the thermal insulation washer between a hot runner and a cooling setting section. The reason lies in that polytetrafluoroethylene has low thermal conductivity and can isolate the heat from the hot runner. At a high extrusion temperature of PEEK, that is, 365 °C-400 °C, exceeding the working limit of PTFE, PTFE will be decomposed and carbonized after exceeding 260 °C and fail to work, leading to high difficulty in extrusion production of PEEK.

The patent application DE 100 13 920A1 discloses an injection molding system for elastomers comprises injector for vulcanisable elastomer and heated molding section, channel which feeds elastomer to molds having block of insulating material with central bore mounted at its top, which comprises an injector for molding material, especially vulcanisable elastomer, and a heated molding section. The channel which feeds elastomer to the molds has a block of insulating material with a central bore mounted at its top.

The patent application FR1524962A discloses a special nozzles for plastic injection molding machines representing a solution commonly referred to as "coreless" injection in the field, which involves injection without a supply channel.

### SUMMARY OF THE INVENTION

In order to improve the heat resistance of a thermal insulation washer and reduce the difficulty in extrusion production of ultra-high temperature special engineering plastic bars, the present application provides a thermal insulation washer and the use thereof in the extrusion of ultra-high temperature engineering plastics.

In a first aspect, the application provides a use of a thermal insulation washer in the extrusion of ultra-high temperature special engineering plastics, which adopts the following technical solution:
Use of a thermal insulation washer in extrusion of ultra-high temperature engineering plastics, characterized in that, the thermal insulation washer comprises a zirconia thermal insulation washer arranged adjacent to an ultra-high temperature special engineering plastic bar between a hot runner and a cooling setting section of an injection molding machine, the zirconia thermal insulation washer is configured as a cylindrical shape, and a working surface of cylindrical inner wall of the zirconia thermal insulation washer is polished to a surface roughness Ra of 0.08 µm to 0.16 µm.

In the above technical solution, zirconia has machining performance and can be made into zirconia thermal insulation washer. Zirconia thermal insulation washer has excellent thermal insulation performance, and can isolate the heat from the hot runner of the injection molding machine. Further, it has a high temperature strength exceeding the production temperature of ultra-high temperature special engineering plastic bars, and thus can meet the production requirements of temperature resistance and thermal insulation of ultra-high temperature special engineering plastic bars, thereby reducing production difficulty.

The working surface of zirconia thermal insulation washer is polished to reduce the roughness, so that its surface is smooth, and plays anti-adhesion function in the process of bar extrusion.

Preferably, one side of the zirconia thermal insulation washer facing away from the hot runner of the injection molding machine is connected with a bar mold, an injection hole running through two opposite ends of the bar mold is provided in the bar mold, the interior of the zirconia thermal insulation washer is communicated with the injection hole, and the bar mold is provided with a cooling mechanism.

In the above technical solution, the zirconia thermal insulation washer is used as a transition section between the hot runner and the cooling setting section of the injection molding machine. The zirconia thermal insulation washer has the properties of thermal insulation, high temperature resistance and anti-adhesion property, and thus can meet the high-temperature production requirements of ultra-high temperature special engineering plastics. During the flow of molten plastics through the injection hole, the cooling mechanism provides cooling for the molten plastics to achieve cooling setting.

Preferably, taking a central axis of the zirconia thermal insulation washer as a reference line, there is a parallelism of 0.01 mm - 0.02 mm between joint faces of the zirconia thermal insulation washer and the bar mold.

In the above technical solution, since the toughness of the zirconia thermal insulation washer is not high, the parallelism between the zirconia thermal insulation washer and the connecting surface of the bar mold shall be ensured during installation, which can prevent the zirconia thermal insulation washer from cracking due to uneven stress between the joint faces during clamping the zirconia thermal insulation washer with locking screws.

Preferably, the cooling mechanism is configured as a spiral water channel, the spiral water channel is arranged inside the bar mold and would around the injection hole, and the outer wall of the bar mold is provided with a water inlet and a water outlet communicated with the spiral water channel.

In the above technical solution, the cooling water enters the spiral water channel through the water inlet, so that it can exchange heat with molten plastics passing through the injection hole and provide cooling therefor, and then the cooling water with high temperature in the spiral water channel can be discharged from the water outlet.

Preferably, the water inlet is located on the end of the bar mold away from the zirconia thermal insulation washer, and the water outlet is located on the end of the bar mold close to the zirconia thermal insulation washer.

In the above technical scheme, the cooling water continuously exchanges heat with the bar mold in the process of flowing from the water inlet to the water outlet. The temperature at the part of the bar mold near the zirconia thermal insulation washer is high, and the temperature difference between the bar mold and the cooling water is small when the cooling water flows to the bar mold near the zirconia thermal insulation washer, so that the change of bar properties due to the rapid cooling of molten plastic can be avoided.

Preferably, an insertion groove is provided at the end of the bar mold close to the zirconia thermal insulation washer and at the edge of the injection hole, and one end of the zirconia thermal insulation washer is in fit inserting connection with the insertion groove.

In the above technical solution, when the zirconia thermal insulation washer is connected with the bar mold, the zirconia thermal insulation washer is in fit connection with the insertion groove to preposition them relative to each other, so that they can be accurately connected.

In a second aspect, the present application provides a thermal insulation washer, which adopts the following technical solution:
A thermal insulation washer for use in the extrusion of ultra-high temperature engineering plastics, the thermal insulation washer comprises a zirconia thermal insulation washer arranged adjacent to an ultra-high temperature special engineering plastic bar between a hot runner and a cooling setting section of an injection molding machine, the zirconia thermal insulation washer is configured as a cylindrical shape, and a working surface of cylindrical inner wall of the zirconia thermal insulation washer (3) is polished to a surface roughness Ra of 0.08 µm to 0.16 µm.

Preferably, the zirconia thermal insulation washer has an inner diameter of 50 mm - 200 mm, a radial thickness of 6.2 mm - 10 mm, and an axis length of 15 mm - 20 mm.

Preferably, the zirconia thermal insulation washer has an inner diameter of 50 mm, a radial thickness of 6.2 mm and an axis length of 15 mm.

In the above technical solution, the inner diameter of zirconia thermal insulation washer is suitable for plastic bars of different sizes and models. The thickness of zirconia thermal insulation washer with inner diameter of 50 mm is controlled within the above range, which can ensure the thermal insulation performance of zirconia thermal insulation washer and avoid negatively affecting the installation due to low toughness of the zirconia thermal insulation washer.

Preferably, the zirconia thermal insulation washer has an inner diameter of 200 mm, a radial thickness of 10 mm and an axis length of 20 mm.

In the above technical solution, the inner diameter of the zirconia thermal insulation washer is suitable for plastic bars of different sizes and models. The thickness of the zirconia thermal insulation washer with an inner diameter of 200 mm is controlled within the above range, which can ensure the thermal insulation performance of the zirconia thermal insulation washer and avoid negatively affecting the installation due to low toughness of the zirconia thermal insulation washer.

In summary, the present application achieves at least one of the following beneficial effects.
1. Zirconia thermal insulation washer has excellent thermal insulation performance, and can isolate the heat from the hot runner of the injection molding machine. Further, the high temperature strength of the zirconia thermal insulation washer exceeds that required for the production temperature of ultra-high temperature special engineering plastic bars, so that it can meet the production requirements of temperature resistance and thermal insulation of ultra-high temperature special engineering plastic bars and reduce production difficulty.
2. Polishing the working surface of the zirconia thermal insulation washer can reduce the roughness of the working surface and make it smooth, playing anti-adhesion function in the process of bar extrusion.
3. By ensuring the parallelism between joint faces of the zirconia thermal insulation washer and the bar mold during installation, the fracture of zirconia thermal insulation washer due to uneven stress between faces during installation, in spite of a relatively low toughness of zirconia thermal insulation washer.

### BRIEF DESCRIPTION OF THE DRAWINGS

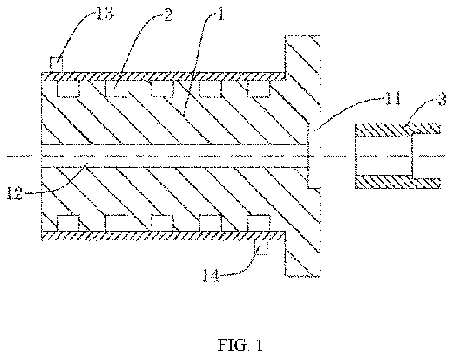

Fig. 1 is an overall structural diagram of a thermal insulation washer according to an embodiment of the present application.

In the figures: 1. Bar mold; 11. Insertion groove; 12. Injection hole; 13. Water inlet; 14. Water outlet; 2. Spiral water channel; 3. Zirconia thermal insulation washer.

### DETAILED DESCRIPTION

The present application will further described in detail below in combination with Fig.1, Preparation examples and Examples.

### Preparation example

### Preparation example 1

A thermal insulation washer included a cylindrical zirconia thermal insulation washer 3. The inner diameter of the zirconia thermal insulation washer 3 was 50 mm, the radial thickness was 6.2 mm, and the axis length was 15 mm.

### Preparation example 2

Referring to Fig. 1, a thermal insulation washer prepared in this Preparation example differs from that in Preparation example 1 in that, the inner diameter of the zirconia thermal insulation washer 3 was 200 mm, the radial thickness was 10 mm and the axis length was 20 mm.

### Examples

### Example 1

The use of a thermal insulation washer in the extrusion of ultra-high temperature engineering plastics was provided. Referring to Fig. 1, the thermal insulation washer included a zirconia thermal insulation washer 3 and a bar mold 1. The zirconia thermal insulation washer 3 adopted the zirconia thermal insulation washer 3 obtained in Preparation example 1, the bar mold 1 was of a cylindrical shape, and provided with an injection hole 12 running through two opposite end faces and extending along the length direction of the bar mold 1. The bar mold 1 was used as the cooling setting section of the injection molding machine, and the zirconia thermal insulation washer 3 was positioned between the hot runner and the cooling setting section of the injection molding machine.

An insertion groove 11 was opened at the end of the bar mold 1 close to the injection molding machine and at the edge of the injection hole 12. One end of the zirconia thermal insulation washer 3 was fit inserted in the insertion groove 11. The zirconia thermal insulation washer 3 has a low thermal conductivity and a high temperature resistance, and thus can reduce heat transfer. The ultra-high temperature special engineering plastic bar was a PEEK bar.

The bar mold 1 was provided with a cooling mechanism configured as a spiral water channel 2 arranged inside the bar mold 1. The spiral water channel 2 was spirally wound on the outside of the injection molding rubber along the length direction thereof. The spiral water channel 2 was filled with cooling water, and the outer wall of the bar mold 1 was connected with a water inlet 13 and a water outlet 14 which were both communicated with the spiral water channel 2.

The water inlet 13 was located on the side wall of the bar mold 1 away from the zirconia thermal insulation washer 3, and the water outlet 14 is located on the side wall of the bar mold 1 close to the zirconia thermal insulation washer 3. The cooling water entered the spiral water channel 2 from the water inlet 13 and then was discharged out of the water outlet 14. The cooling water continuously exchanged heat with the bar mold 1 during the flowing from the water inlet 13 to the water outlet 14. The temperature at the part of the bar mold 1 close to the zirconia thermal insulation washer 3 was relatively high. When the cooling water flowed to the part of the bar mold 1 close to the zirconia thermal insulation washer 3, the temperature difference between the bar mold and the cooling water is small, so that the change of the performance of the bar due to the rapid cooling of molten plastic can be avoided.

An insertion groove 11 was provided at one end of the bar mold 1 close to the zirconia thermal insulation washer 3 and at the edge of the injection hole 12, which was in fit inserting connection with one side of the zirconia thermal insulation washer 3.

The zirconia thermal insulation washer 3 was connected with the bar mold 1 via a locking screw. Taking the central axis of the zirconia thermal insulation washer 3 as a reference line, it was ensured that the joint faces of the zirconia thermal insulation washer 3 and the bar mold 1 had a parallelism of 0.01 mm - 0.02 mm. The clamping force of the locking screw was kept uniform during the connecting process.

### Example 2

The use of a thermal insulation washer in the extrusion of ultra-high temperature engineering plastics was provided. Referring to Fig. 1, this example was different from Example 1 in that the zirconia thermal insulation washer 3 adopted the zirconia thermal insulation washer 3 obtained in Preparation example 2.

### Example 3

The use of a thermal insulation washer in the extrusion of ultra-high temperature engineering plastics was provided. Referring to Fig. 1, this example was different from Example 1 in that the inner surface of the zirconia thermal insulation washer 3 was polished by a polishing machine according to the standard of GB1031-68 *Surface Finish Grade*, and the working surface of cylindrical inner wall of the zirconia thermal insulation washer 3 was polished to have a surface roughness Ra of 0.63 mm - 1.25 mm.

### Example 4

The use of a thermal insulation washer in the extrusion of ultra-high temperature engineering plastics was provided. Referring to Fig. 1, this example was different from Example 1 in that the inner surface of zirconia thermal insulation washer 3 was polished to mirror-like finish by a polishing machine according to the standard of GB1031-68 *Surface Finish Grade*, and the working surface of the cylindrical inner wall of the zirconia thermal insulation washer 3 was polished to have a surface roughness Ra of 0.16 µm - 0.32 µm.

### Example 5

The use of a thermal insulation washer in the extrusion of ultra-high temperature engineering plastics was provide. Referring to Fig. 1, this example was different from Example 1 in that the zirconia thermal insulation washer 3 adopted the zirconia thermal insulation washer 3 obtained in Preparation example 2. The inner surface of the zirconia thermal insulation washer 3 was polished to mirror-like finish by a polishing machine according to the standard of GB 1031-68 *Surface Finish Grade*, and the working surface of the cylindrical inner wall of the zirconia thermal insulation washer 3 was polished to have a surface roughness Ra of 0.16 µm - 0.32 µm.

### Comparison examples

### Comparison example 1

The use of a thermal insulation washer in the extrusion of ultra-high temperature engineering plastics was provided. This comparison example was different from Example 1 in that the thermal insulation washer adopted phlogopite thermal insulation washer.

### Comparison example 2

The use of a thermal insulation washer in the extrusion of ultra-high temperature engineering plastics was provided. This comparison example was different from Example 1 in that the thermal insulation washer adopted silicon carbide thermal insulation washer.

### Comparison example 3

The use of a thermal insulation washer in the extrusion of ultra-high temperature engineering plastics was provided. This comparison example was different from Example 1 in that the thermal insulation washer adopted silicon nitride thermal insulation washer.

### Comparison example 4

The use of a thermal insulation washer in the extrusion of ultra-high temperature engineering plastics was provided. This comparison example was different from Example 1 in that the thermal insulation washer adopted alumina thermal insulation washer.

### Performance test

Thermal conductivity test: the thermal conductivity (w/m.k) of a thermal insulation washer in the use of ultra-high temperature special engineering plastics extrusion in Examples 1-5 and Comparison examples 1-4 was tested according to GB/T 10297-2015 *Test Method For Thermal Conductivity of Nonmetal Solid Materials;*
high temperature strength test: the high temperature strength (MPA) of a thermal insulation washer in the use of ultra-high temperature special engineering plastics extrusion in Examples 1-5 and Comparison examples 1-4 was tested according to GB T 22307-2008 *Standard Test Method for Compressive Strength of washer at Elevated Temperatures;*
fracture toughness test: fracture toughness (MPa/m) of a thermal insulation washer in the use of ultra-high temperature special engineering plastics extrusion in Examples 1-5 and Comparison examples 1-4 was tested according to GB/T 23806-2009 *Test Method for Fracture Toughness of Monolithic Ceramics*; and
anti-adhesion test: during using the thermal insulation washer in the use of ultra-high temperature engineering plastics extrusion in Example 1-5 and Comparison example 1-4 to produce a ultra-high temperature special engineering plastic plate/rod, the extrusion pressure was detected by an extrusion pressure tester installed on the injection molding machine. The anti adhesion of the thermal insulation washer decreases with the increase of pressure index. If the pressure of the extrusion pressure tester is 4 Mpa - 6 Mpa, it indicates that the anti-adhesion property of the thermal insulation washer is not qualified. If the pressure of the extrusion pressure tester is in 1 Mpa - 3 Mpa, the anti-adhesion property of the surface thermal insulation washer meets the standard.

**Table 1 - Summary of test data of thermal insulation washer in Examples 1-5 and Comparative examples 1-4**

| Testing Items | Thermal conductivity (W/m.k) | High temperature strength (MPa) | Fracture toughness (MPa/m) | Anti-adhesion (MPa) |
|---|---|---|---|---|
| Example 1 | 3 | 560 | 4 | 3 |
| Example 2 | 2 | 560 | 5 | 3 |
| Example 3 | 3 | 560 | 5 | 2 |
| Example 4 | 3 | 560 | 5 | 1 |
| Example 5 | 2 | 560 | 5 | 1 |
| Comparison example 1 | 2 | 580 | 1 | 6 |
| Comparison example 2 | 200 | 540 | 3 | 3 |
| Comparison example 3 | 27 | 900 | 7 | 3 |
| Comparison example 4 | 32 | 250 | 4 | 4 |

It can be seen from the data comparison of Example 1 and Comparison examples 1-4 in Table 1 that zirconia thermal insulation washer has low thermal conductivity and excellent thermal insulation performance, and the high-temperature strength of the zirconia thermal insulation washer exceeds that required for the production temperature of ultra-high temperature special engineering plastic bars. Since zirconia thermal insulation washer has certain mechanical strength, it can be machined, and can meet the production requirements of temperature resistance, thermal insulation and anti adhesion for ultra-high temperature special engineering plastic bars. Further, it involves in low price and reduced production cost.

It can be seen from the data comparison of Example 1 and Comparison example 1 in Table 1 that the high temperature resistance and thermal insulation performance of the phlogopite thermal insulation washer meet the requirements for extrusion production of ultra-high temperature special engineering plastic bars. However, the phlogopite thermal insulation washer has layered structure, high surface roughness, that is, not smooth enough, and low mechanical strength, failing to be polished on the working surface and tending to layering during operation. Therefore, serious adhesion occurs in the extrusion process of ultra-high temperature special engineering plastic bars, indicating that the phlogopite thermal insulation washer cannot meet the production requirements.

It can be seen from the data comparison of Example 1 and Comparison example 2 in Table 1 that the silicon carbide thermal insulation washer has poor thermal insulation performance and low toughness. It is easy to crack under pressure during installing silicon carbide thermal insulation washer, and thus cannot meet the requirement for thermal insulation production of ultra-high temperature special engineering plastic bar by extrusion.

It can be seen from the data comparison of Example 1 and Comparison example 3 in Table 1 that the high-temperature strength of silicon nitride thermal insulation washer is much higher than that required for the production temperature of ultra-high temperature special engineering plastic bars, and the toughness is high, but the thermal insulation performance of silicon nitride is poor compared with that of zirconia. Considering that the thermal insulation performance is an important index in the production of ultra-high temperature special engineering plastic bars, silicon nitride thermal insulation washer cannot meet the high requirements of thermal insulation production of ultra-high temperature special engineering plastic bars by extrusion.

It can be seen from the data comparison of Example 1 and Comparison example 4 in Table 1 that the high-temperature strength of alumina thermal insulation washer is much lower than that required for the extrusion temperature of ultra-high temperature special engineering plastic bars. During the extrusion process of ultra-high temperature special engineering plastic bar for a long time, alumina thermal insulation washer becomes brittle due to insufficient temperature resistance, negatively affecting the extrusion of bars.

It can be seen from the data comparison of Examples 1 and 3-4 in Table 1 that polishing the working surface of zirconia thermal insulation washer can reduce the roughness to make the surface smooth. By controlling the surface roughness of the working surface Ra to be 0.08 µm - 0.16 µm, it has excellent anti-adhesion effect in the process of bar extrusion.

The above specific examples are only an interpretation of the application and is not intended to impose any limitation to the present application. After reading the specification, those skilled in the art can make modifications to the embodiment without creative contribution as needed, but they are protected by the patent law as long as they are within the scope of the claims of the application.

## Claims

1. Use of a thermal insulation washer in extrusion of ultra-high temperature engineering plastics, wherein the thermal insulation washer comprises a zirconia thermal insulation washer (3) arranged adjacent to an ultra-high temperature special engineering plastic bar between a hot runner and a cooling setting section of an injection molding machine, **characterised in that** the zirconia thermal insulation washer (3) is configured as a cylindrical shape, and a working surface of cylindrical inner wall of the zirconia thermal insulation washer (3) is polished to a surface roughness Ra of 0.08 µm to 0.16 µm.

2. The use of a thermal insulation washer in extrusion of ultra-high temperature engineering plastics according to claim 1, **characterized in that**, one side of the zirconia thermal insulation washer (3) facing away from the hot runner of the injection molding machine is connected with a bar mold (1), an injection hole (12) running through two opposite ends of the bar mold (1) is provided in the bar mold (1), the interior of the zirconia thermal insulation washer (3) is communicated with the injection hole (12), and the bar mold (1) is provided with a cooling mechanism.

3. The use of a thermal insulation washer in extrusion of ultra-high temperature engineering plastics according to claim 2, **characterized in that**, taking a central axis of the zirconia thermal insulation washer (3) as a reference line, there is a parallelism of 0.01 mm - 0.02 mm between joint faces of the zirconia thermal insulation washer (3) and the bar mold (1).

4. The use of a thermal insulation washer in extrusion of ultra-high temperature engineering plastics according to claim 2, **characterized in that**, the cooling mechanism is configured as a spiral water channel (2), the spiral water channel (2) is arranged inside the bar mold (1) and wound around the injection hole (12), and an outer wall of the bar mold (1) is provided with a water inlet (13) and a water outlet (14) communicated with the spiral water channel (2).

5. The use of a thermal insulation washer in extrusion of ultra-high temperature engineering plastics according to claim 4, **characterized in that**, the water inlet is located at an end of the bar mold (1) away from the zirconia thermal insulation washer (3), and the water outlet is located at an end of the bar mold (1) close to the zirconia thermal insulation washer (3).

6. The use of a thermal insulation washer in extrusion of ultra-high temperature engineering plastics according to claim 2, **characterized in that**, an insertion groove is provided at an end of the bar mold (1) close to the zirconia thermal insulation washer (3) and at an edge of the injection hole (12), and the insertion groove (11) is in fit inserting connection with one end of the zirconia thermal insulation washer (3).

7. A thermal insulation washer used in the extrusion of ultra-high temperature engineering plastics, wherein the thermal insulation washer comprises a zirconia thermal insulation washer (3) arranged adjacent to an ultra-high temperature special engineering plastic bar between a hot runner and a cooling setting section of an injection molding machine, **characterised in that** the zirconia thermal insulation washer (3) is configured as a cylindrical shape, and a working surface of cylindrical inner wall of the zirconia thermal insulation washer (3) is polished to a surface roughness Ra of 0.08 µm to 0.16 µm.

8. The thermal insulation washer according to claim 7, **characterized in that**, the zirconia thermal insulation washer (3) has an inner diameter of 50 mm - 200 mm, a radial thickness of 6.2 mm - 10 mm, and an axis length of 15 mm - 20 mm.

## Patentansprüche

1. Verwendung einer Wärmeisolierscheibe bei der Extrusion von technischen Ultrahochtemperaturkunststoffen, wobei die Wärmeisolierscheibe eine Zirkoniumdioxid-Wärmeisolierscheibe (3) umfasst, die benachbart zu einem speziellen Stab aus einem technischem Ultrahochtemperaturkunststoff zwischen einem Heißkanal und einem Kühlungseinstellabschnitt einer Spritzgießmaschine angeordnet ist, **dadurch gekennzeichnet, dass** die Zirkoniumdioxid-Wärmeisolierscheibe (3) als Zylinder ausgebildet ist und die Arbeitsfläche der zylindrischen Innenwand der Zirkoniumdioxid-Wärmeisolierscheibe (3) auf eine Oberflächenrauhigkeit Ra von 0,08 µm bis 0,16 µm poliert ist.

2. Verwendung einer Wärmeisolierscheibe bei der Extrusion von technischen Ultrahochtemperaturkunststoffen nach Anspruch 1, **dadurch gekennzeichnet, dass** eine dem Heißkanal der Spritzgießmaschine abgewandte Seite der Zirkoniumdioxid-Wärmeisolierscheibe (3) mit einer stabartigen Form (1) verbunden ist, wobei ein Einspritzloch (12), das durch zwei gegenüberliegende Enden der stabartigen Form (1) verläuft, in der stabartigen Form (1) vorgesehen ist, wobei das Innere der Zirkoniumdioxid-Wärmeisolierscheibe (3) mit dem Einspritzloch (12) verbunden ist und die stabartige Form (1) mit einem Kühlmechanismus versehen ist.

3. Verwendung einer Wärmeisolierscheibe bei der Extrusion von technischen Ultrahochtemperaturkunststoffen gemäß Anspruch 2, **dadurch gekennzeichnet, dass**, wenn man eine Mittelachse der Wärmeisolierscheibe (3) aus Zirkoniumdioxid als Bezugslinie nimmt, eine Parallelität von 0,01 mm - 0,02 mm zwischen den Verbindungsflächen der Wärmeisolierscheibe (3) aus Zirkoniumdioxid und der stabartigen Form (1) besteht.

4. Verwendung einer Wärmeisolierscheibe bei der Extrusion von technischen Ultrahochtemperaturkunststoffen nach Anspruch 2, **dadurch gekennzeichnet, dass** der Kühlmechanismus als spiralförmiger Wasserkanal (2) ausgebildet ist, wobei der spiralförmige Wasserkanal (2) innerhalb der stabartigen Form (1) angeordnet und um das Einspritzloch (12) gewunden ist, und dass eine Außenwand der stabartigen Form (1) mit einem Wassereinlass (13) und einem Wasserauslass (14) versehen ist, die mit dem spiralförmigen Wasserkanal (2) in Verbindung stehen.

5. Verwendung einer Wärmeisolierscheibe bei der Extrusion von technischen Ultrahochtemperaturkunststoffen nach Anspruch 4, **dadurch gekennzeichnet, dass** der Wassereinlass an einem von der Zirkoniumdioxid-Wärmeisolierscheibe (3) entfernten Ende der stabartigen Form (1) angeordnet ist und der Wasserauslass an einem der Zirkoniumdioxid-Wärmeisolierscheibe (3) benachbarten Ende der stabartigen Form (1) angeordnet ist.

6. Verwendung einer Wärmeisolierscheibe bei der Extrusion von technischen Ultrahochtemperaturkunststoffen nach Anspruch 2, **dadurch gekennzeichnet, dass** an einem Ende der stabartigen Form (1) in der Nähe der Zirkoniumdioxid-Wärmeisolierscheibe (3) und an einer Kante des Einspritzlochs (12) eine Einführnut (11) vorgesehen ist, die passgenau mit einem Ende der Zirkoniumdioxid-Wärmeisolierscheibe (3) zusammengesteckt und verbunden ist.

7. Wärmeisolierscheibe, die bei der Extrusion von technischen Ultrahochtemperaturkunststoffen verwendbar ist, wobei die Wärmeisolierscheibe eine Wärmeisolierscheibe (3) aus Zirkoniumdioxid umfasst, die benachbart zu einem speziellen Stab aus einem technischen Ultrahochtemperaturkunststoff zwischen einem Heißkanal und einem Kühlungseinstellabschnitt einer Spritzgießmaschine angeordnet ist, **dadurch gekennzeichnet, dass** die Wärmeisolierscheibe (3) aus Zirkoniumdioxid als Zylinder ausgebildet ist und eine Arbeitsfläche der zylindrischen Innenwand der Zirkoniumdioxid-Wärmeisolierscheibe (3) auf eine Oberflächenrauhigkeit Ra von 0,08 µm bis 0,16 µm poliert ist.

8. Wärmeisolierscheibe nach Anspruch 7, **dadurch gekennzeichnet, dass** die Zirkoniumdioxid-Wärmeisolierscheibe (3) einen Innendurchmesser von 50 mm bis 200 mm, eine radiale Dicke von 6,2 mm bis 10 mm und eine axiale Länge von 15 mm bis 20 mm aufweist.

## Revendications

1. Utilisation d'une rondelle d'isolation thermique dans l'extrusion de plastiques techniques à ultra-haute température, en ce que la rondelle d'isolation thermique comprend une rondelle d'isolation thermique en zircone (3) disposée de manière adjacente à une barre en plastique technique spéciale à ultra-haute température entre un canal de carotte chauffé et une ligne de réglage de refroidissement d'une machine à mouler par injection, **caractérisée en ce que** la rondelle d'isolation thermique en zircone (3) est configurée en forme cylindrique, et qu'une surface de travail de la paroi intérieure cylindrique de la rondelle d'isolation thermique en zircone (3) est polie pour obtenir une rugosité de surface Ra comprise entre 0,08 µm et 0,16 µm.

2. Utilisation d'une rondelle d'isolation thermique dans l'extrusion de plastiques techniques à ultra-haute température selon la revendication 1, **caractérisée en ce qu'**une face de la rondelle d'isolation thermique en zircone (3) opposée au canal de carotte chauffé de la machine à mouler par injection est reliée à un moule à barre (1), un trou d'injection (12) traversant deux extrémités opposées du moule à barre (1) est ménagé dans le moule à barre (1), l'intérieur de la rondelle d'isolation thermique en zircone (3) communique avec le trou d'injection (12), et le moule à barre (1) comporte un mécanisme de refroidissement.

3. Utilisation d'une rondelle d'isolation thermique dans l'extrusion de plastiques techniques à ultra-haute température selon la revendication 2, **caractérisée en ce que**, en prenant un axe central de la rondelle d'isolation thermique en zircone (3) comme ligne de référence, il existe un parallélisme de 0,01 mm à 0,02 mm entre les faces de joint de la rondelle d'isolation thermique en zircone (3) et le moule à barre (1).

4. Utilisation d'une rondelle d'isolation thermique dans l'extrusion de plastiques techniques à ultra-haute température selon la revendication 2, **caractérisée en ce que** le mécanisme de refroidissement est configuré sous forme de conduite d'eau en spirale (2), la conduite d'eau en spirale (2) est disposée à l'intérieur du moule à barre (1) et enroulée autour du trou d'injection (12), et une paroi extérieure du moule à barre (1) comporte une entrée d'eau (13) et une sortie d'eau (14) communiquant avec la conduite d'eau en spirale (2).

5. Utilisation d'une rondelle d'isolation thermique dans l'extrusion de plastiques techniques à ultra-haute température selon la revendication 4, **caractérisée en ce que** l'entrée d'eau est située à une extrémité du moule à barre (1) éloignée de la rondelle d'isolation thermique en zircone (3), et la sortie d'eau est située à une extrémité du moule à barre (1) proche de la rondelle d'isolation thermique en zircone (3).

6. Utilisation d'une rondelle d'isolation thermique dans l'extrusion de plastiques techniques à ultra-haute température selon la revendication 2, **caractérisée en ce qu'**une rainure d'introduction est ménagée au niveau d'une extrémité du moule à barre (1) proche de la rondelle d'isolation thermique en zircone (3) et au niveau d'un bord du trou d'injection (12), et la rainure d'introduction (11) est reliée par insertion à une extrémité de la rondelle d'isolation thermique en zircone (3).

7. Rondelle d'isolation thermique utilisée dans l'extrusion de plastiques techniques à ultra-haute température, en ce que la rondelle d'isolation thermique comprend une rondelle d'isolation thermique en zircone (3) disposée de manière adjacente à une barre en plastique technique spéciale à ultra-haute température entre un canal de carotte chauffé et une ligne de réglage de refroidissement d'une machine à mouler par injection, **caractérisée en ce que** la rondelle d'isolation thermique en zircone (3) est configurée en forme cylindrique, et qu'une surface de travail de la paroi intérieure cylindrique de la rondelle d'isolation thermique en zircone (3) est polie pour obtenir une rugosité de surface Ra comprise entre 0,08 µm et 0,16 µm.

8. Rondelle d'isolation thermique selon la revendication 7, **caractérisée en ce que** la rondelle d'isolation thermique en zircone (3) a un diamètre intérieur compris entre 50 mm et 200 mm, une épaisseur radiale de 6,2 mm à 10 mm, et une longueur d'axe de 15 mm à 20 mm.
